# EUROPÄISCHE PATENTANMELDUNG

(11) **EP 1 202 170 A2**
(43) Veröffentlichungstag der Anmeldung: **02.05.2002**
(21) Anmeldenummer: 01124012.4
(22) Anmeldetag: 09.10.2001
(51) Int. Cl.: G06F 9/445

(54) **Verfahren zum Übertragen von gerätespezifischen Programmdaten über eine zusätzliche Schnittstelle**

(30) Priorität: 30.10.2000 DE 10053744
(71) Anmelder: Wincor Nixdorf GmbH & Co KG, 33106 Paderborn (DE)
(72) Erfinder: Hoffmann, Stefan, 12163 Berlin (DE); Buettner, Michael, 10587 Berlin (DE); Widmaier, Dominik, 12157 Berlin (DE)

(57) **Zusammenfassung**

Die Erfindung betrifft ein Verfahren, bei dem Programmdaten von einer weiteren Steuerung (12) über eine erste Schnittstelle (18, 20) zu einer Gerätesteuerung (22) übertragen werden. Die Gerätesteuerung (22) hat ein gerätespezifisches Programmmodul, das in einem Speicherbereich der Gerätesteuerung (22) gespeichert ist. Durch das Abarbeiten des gerätespezifischen Programmmoduls werden zumindest Grundfunktionen der Gerätesteuerung (22) bereitgestellt. Mit Hilfe einer zweiten Schnittstelle (26, 28) werden Daten zu der Gerätesteuerung (22) übertragen, mit denen zumindest Teile des gerätespezifischen Programmmoduls überschreibbar sind. Weiterhin ist eine Gerätesteuerung (22) und ein Datenverarbeitungssystem (10) angegeben, bei denen ein gerätespezifisches Programmmodul erneuerbar ist.

## Beschreibung

Die Erfindung betrifft ein Verfahren zum Übertragen von gerätespezifischen Programmdaten, bei dem Daten zwischen einer Gerätesteuerung und einer weiteren Steuerung über eine Schnittstelle übertragen werden. Die Gerätesteuerung hat ein gerätespezifisches Programmmodul, das in einem Speicherbereich der Gerätesteuerung gespeichert wird. Durch das Abarbeiten des gerätespezifischen Programmmoduls werden zumindest Grundfunktionen der Gerätesteuerung bereitgestellt. Die Erfindung betrifft weiterhin ein Datenverarbeitungssystem und eine Gerätesteuerung zum Durchführen eines solchen Verfahrens.

Gerätesteuerungen werden vor allem in Peripheriegeräten und in Baueinheiten von Datenverarbeitungssystemen verwendet. Die peripheren Geräte, die eine Gerätesteuerung enthalten, dienen vorrangig der Ausgabe von Daten, der Mensch-Maschine-Kommunikation und der Datenspeicherung. Dazu zählen z.B. druckende und zeichnende Geräte, wie Drucker, Mikrofilmausgabegeräte und Zeichengeräte, Geräte der Mensch-Maschine-Kommunikation, wie Bildschirme, Tastaturen, Mäuse, Joysticks, Sprachausgabe- und Spracheingabegeräte, Geräte der optischen Zeichenerkennung, wie Strichcodeleser, Markierungsleser, Belegleser, Seitenleser und Scanner sowie externe Speicher, wie Diskettenspeicher, Festplattenspeicher, Magnetbandspeicher und CD-ROM-Speicher. Aber auch Komponenten von Datenverarbeitungssystemen, wie Grafikkarten, Soundkarten sowie die Hauptplatinen von Recheneinheiten haben Gerätesteuerungen.

Bei Hauptplatinen von Recheneinheiten, den sogenannten Mainboards, ist eine solche Gerätesteuerung das sogenannte BIOS (Basic Input Output System). Das BIOS ist das grundlegende Systemprogramm eines Personalcomputers, das unmittelbar nach dem Einschalten zur Verfügung steht. Das BIOS ist in einem Festwertspeicher auf der Hauptplatine gespeichert. Bei modernen Hauptplatinen ist es möglich, die Programmdaten des BIOS durch neue Programmdaten zu ersetzen.

Bei anderen Gerätesteuerungen, wie z.B. bei Gerätesteuerungen von Druckern, Scannern aber auch bei Gerätesteuerungen von Funktelefonen ist es möglich, die Programmdaten der Gerätesteuerungen durch andere Programmdaten zu ersetzen, die bei solchen Gerätesteuerungen meist als Firmware bezeichnet werden. Das Übermitteln der Programmdaten an die jeweilige Gerätesteuerung erfolgt meist mit Hilfe einer Datenübertragung zwischen einer weiteren Recheneinheit und der Gerätesteuerung. Dabei werden meist Schnittstellen benutzt, mit denen die Gerätesteuerung auch für den bestimmungsgemäßen Betrieb des Gerätes verbunden ist. Insbesondere bei komplizierten Schnittstellen, wie USB-Schnittstellen oder Fire-Wire-Schnittstellen ist es aber auch möglich, daß die Programme, die die Funktion dieser Schnittstellen sicherstellen sollen, fehlerbehaftet sind. In einem solchen Fall müssen die Programmdaten für die Schnittstellensteuerung ausgetauscht werden. Um dies durchzuführen, ist es notwendig, die Speicherschaltkreise der Gerätesteuerung, in denen die Programmdaten für den Betrieb der Schnittstelle gespeichert sind, auszutauschen.

In anderen Fällen ist die jeweilige Schnittstelle des Gerätes mit weiteren Geräten verbunden. So kann z.B. ein Drucker zum bestimmungsgemäßen Betrieb mit einem Personalcomputer verbunden sein. Soll die Schnittstelle, über die der Drucker mit dem Personalcomputer verbunden ist, zum Übertragen der Programmdaten für die Gerätesteuerung genutzt werden, so muß auf dem Personalcomputer, mit dem die Gerätesteuerung verbunden, ein Serviceprogramm gestartet werden, mit dem eine solche Übertragung möglich ist. Voraussetzung dafür ist, daß das Serviceprogramm mit dem Betriebssystem des Personalcomputers abgearbeitet werden kann. Anderenfalls muß die Verbindung zwischen diesem Personalcomputer und dem Drucker getrennt werden und eine Verbindung zwischen dem Drucker und einer weiteren Recheneinheit, auf der ein solches Serviceprogramm abgearbeitet werden kann, verbunden werden.

Die Serviceprogramme können oft nicht unter Betriebssystemen abgearbeitet werden, die üblicherweise zum bestimmungsgemäßen Gebrauch eines Personalcomputers genutzt werden. So ist es üblich, daß solche Serviceprogramme unter dem Betriebssystem MS-DOS abgearbeitet werden. Bei Personalcomputern werden aber zumeist Betriebssysteme wie UNIX, LINUX oder verschiedene Versionen von MS-WINDOWS betrieben. Zum Ausführen der Serviceprogramme ist es dann notwendig, das aktuell abgearbeitete Betriebssystem zu verlassen und den Personalcomputer mit dem Betriebssystem MS-DOS neu zu starten. Insbesondere bei Personalcomputern, die in einem Netzwerk mit weiteren Recheneinheiten betrieben werden, ist damit ein größerer Aufwand verbunden, da der jeweilige Personalcomputer in diesem Netzwerk abgemeldet und später nach dem Beenden des Betriebssystems MS-DOS und dem Neustart des Personalcomputers mit dem ursprünglichen Betriebssystem eine Anmeldung an dem Netzwerk erfolgen muß.

Es ist Aufgabe der Erfindung, ein Verfahren zum Übertragen von gerätespezifischen Programmdaten anzugeben, das eine komfortable Übertragung der Programmdaten mit geringem Zeit- und Kostenaufwand ermöglicht. Weiterhin soll eine Gerätesteuerung und ein Datenverarbeitungssystem angegeben werden, bei denen ein Austausch von gerätespezifischen Daten einfach möglicht ist.

Diese Aufgabe wird für ein Verfahren durch die Merkmale des Anspruchs 1 gelöst. Vorteilhafte Weiterbildungen sind in den abhängigen Ansprüchen angegeben. Für eine Gerätesteuerung wird die Aufgabe mit den Merkmalen des Anspruchs 8 und für ein Datenverarbeitungssystem mit den Merkmalen des Anspruchs 9 gelöst.

Durch ein Verfahren mit den Merkmalen des Anspruchs 1 ist es möglich, die zu erneuernden gerätespezifischen Programmdaten der Gerätesteuerung mit Hilfe der zweiten Schnittstelle zu übertragen, ohne die Verbindung der Gerätesteuerung zu einer weiteren Recheneinheit physikalisch trennen zu müssen. Auch können die Programmdaten zum Betreiben der ersten Schnittstelle mit Hilfe der zweiten Schnittstelle übertragen und somit erneuert werden.

Bei einer Weiterbildung der Erfindung wird als erste Schnittstelle eine USB-Schnittstelle oder eine Fire-Wire-Schnittstelle eingesetzt. Solche Schnittstellen ermöglichen eine hohe Datentransferrate und sind Standardschnittstellen bei Datenverarbeitungssystemen.

Bei einer vorteilhaften Weiterbildung der Erfindung ist die zweite Schnittstelle eine Infrarotschnittstelle, die auch als IRDA-Schnittstelle bezeichnet wird. Dadurch ist es möglich, mit Hilfe eines Personalcomputers mit Infrarotschnittstelle ohne Verkabelungsaufwand Daten auszutauschen. Als Computer mit Infrarotschnittstelle ist z.B. ein Laptop-Computer mit Infrarotschnittstelle geeignet, da er zudem netzunabhängig betrieben werden kann. Die gerätespezifischen Programmdaten können einfach und unkompliziert während des Abarbeitens eines Serviceprogrammmoduls auf dem Laptop-Computer mit Hilfe der Infrarotschnittstelle übertragen werden. Es ist aber auch möglich, anstelle des Laptop-Computers ein Funktelefon mit Infrarotschnittstelle zur Datenübertragung einzusetzen, das über eine Telefonverbindung mit einem Servicecomputer verbunden ist, der sich in beliebiger Entfernung zu dem jeweiligen Gerät befinden kann. Dadurch ist es möglich, daß insbesondere bei unvorhergesehenen Problemen eine schnelle Fehleranalyse durch Fachpersonal von einem beliebigen Standort aus durchgeführt werden kann.

Weiterhin ist es vorteilhaft, daß mit Hilfe der zweiten Schnittstelle gerätespezifische Programmdaten übertragen werden können, die zum Betreiben der ersten Schnittstelle dienen. Dadurch ist es möglich, daß die zum Betreiben der ersten Schnittstelle notwenigen Programmdaten einfach und unkompliziert, z.B. bei fehlerhaften Programmdaten oder Funktionsänderungen der Gerätesteuerung, ausgetauscht werden können. Insbesondere bei aufwendig anzusteuernden Schnittstellen, wie USB-Schnittstellen oder Fire-Wire-Schnittstellen, können durch komplizierte Schnittstellendefinitionen bei deren Umsetzung in Programmdaten Fehler auftreten. Eine Berichtigung dieser Fehler war bisher nur durch einen hardwaremäßigen Austausch der Speicherschaltkreise möglich, in denen diese Programmdaten gespeichert sind. Mit Hilfe der zweiten Schnittstelle lassen sich diese Daten jedoch einfach zu der Gerätesteuerung übertragen.

Bei einer weiteren vorteilhaften Ausführungsform der Erfindung enthalten die gerätespezifischen Programmdaten zumindest eine Firmware der Gerätesteuerung. Dadurch ist es möglich, Änderungen der Firmware einfach und unkompliziert durchzuführen.

Weiterhin ist es vorteilhaft, daß die Programmdaten des gerätespezifischen Programmmoduls in einem FEPROM-Speicherbereich der Gerätesteuerung gespeichert ist. Der Einsatz von FEPROM-Speichermodulen ist dadurch vorteilhaft, daß sich die FEPROM-Speicher wiederholt überschreiben lassen und auch bei einer Unterbrechung der Versorgungsspannung der Inhalt der FEPROM-Speicher erhalten bleibt. Weiterhin sind FEPROM-Speicher relativ kostengünstig und sind meist schon in Mikrocontrolern, die als Gerätesteuerung eingesetzt werden können, integriert.

Bei einer weiteren Ausführungsform der Erfindung ist es vorteilhaft, die Programmdaten zum Betreiben der zweiten Schnittstelle in einem ROM-Speicherbereich der Gerätesteuerungen zu speichern. Somit ist sichergestellt, daß die Programmdaten zum Betreiben der zweiten Schnittstelle nicht veränderbar sind und daß Programmdaten zum Betreiben der zweiten Schnittstelle immer in der Gerätesteuerung vorhanden sind. Beim Ausführen der zweiten Schnittstelle als IRDA-Schnittstelle oder als RS232-Schnittstelle sind die Programmdaten zum Betreiben dieser Schnittstellen durch die einfache Struktur dieser Schnittstellen leicht überschaubar. Diese Programmdaten sind wiederholt eingesetzt und ausgetestet worden, so daß die Notwendigkeit zum Austauschen dieser Programmdaten nicht zu erwarten ist.

Eine Gerätesteuerung gemäß Anspruch 8 tauscht mit Hilfe einer ersten Schnittstelle Daten mit einer weiteren Steuerung aus. Die Gerätesteuerung hat ein gerätespezifisches Programmmodul, das in einem Speicherbereich der Gerätesteuerung gespeichert ist. Die Gerätesteuerung stellt durch das Abarbeiten des gerätespezifischen Programmmoduls zumindest Grundfunktionen der Gerätesteuerung bereit. Mit Hilfe einer zweiten Schnittstelle sind Daten zu der Gerätesteuerung übertragbar, mit denen zumindest Teile des gerätespezifischen Programmmoduls überschreibbar sind. Mit Hilfe einer solchen Gerätesteuerung ist es einfach möglich, die gerätespezifischen Programmdaten der Gerätesteuerung, z.B. die Firmware der Gerätesteuerung, auszutauschen. Somit lassen sich einfach Fehler in der Firmware beseitigen und/oder Funktionsänderungen der Firmware vornehmen.

Bei einem Datenverarbeitungssystem mit den Merkmalen des Anspruchs 9 ist ein Erneuern gerätespezifischer Programmdaten einer Gerätesteuerung einfach und mit geringem Aufwand möglich.

Weitere Merkmale und Vorteile der Erfindung ergeben sich aus der folgenden Beschreibung, welche in Verbindung mit den beigefügten Zeichnungen die Erfindung an Hand eines Ausführungsbeispiels erläutert. Darin zeigen:
- Figur 1: ein Blockschaltbild eines Datenverarbeitungssystems zum erfindungsgemäßen Überschreiben gerätespezifischer Programmdaten einer Druckersteuerung,
- Figur 2: einen Signalflußplan eines herkömmlichen Verfahrens zum Überschreiben gerätespezifischer Programmdaten von Druckersteuerungen, und
- Figur 3: einen Signalflußplan zum erfindungsgemäßen Überschreiben gerätespezifischer Programmdaten von Druckersteuerungen.

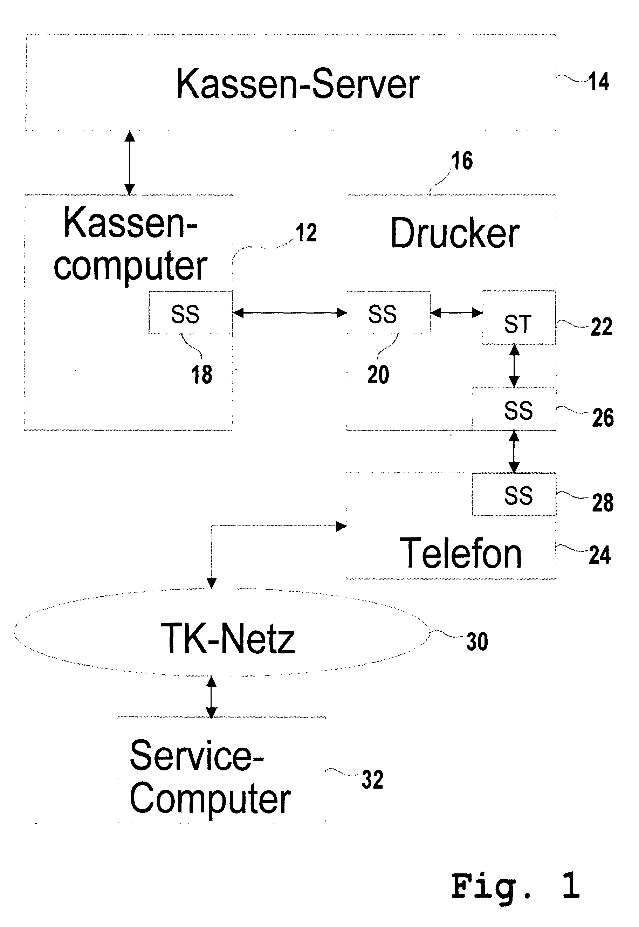

In Figur 1 ist ein Blockschaltbild eines Kassendatenverarbeitungssystems 10 gezeigt. Ein Kassencomputer 12 ist mit einem Zentralcomputer, dem Kassenserver 14, mit Hilfe einer bekannten Netzwerkverbindung verbunden. Weiterhin ist der Kassencomputer 12 mit einem Kassendrucker 16 mit Hilfe der Kassencomputerschnittstelle 18 und der Druckerschnittstelle 20 verbunden. Diese Schnittstellen 18, 20 sind bei diesem Ausführungsbeispiel als USB-Schnittstellen ausgeführt. In anderen Ausführungsbeispielen können diese Schnittstellen 18, 20 auch als Fire-Wire-Schnittstellen oder als beliebige serielle oder parallele Schnittstellen ausgeführt werden. Der Kassendrucker 16 ist weiterhin mit Hilfe einer Infrarotschnittstelle 26, einer sogenannte IRDA-Schnittstelle, mit der Infrarotschnittstelle 28 eines Funktelefons 24 verbunden. Im Kassendrucker 16 sind die Schnittstellen 20 und 26 mit der Druckersteuerung 22 verbunden. Das Funktelefon 24 ist über ein Telekommunikationsnetz 30 mit einem Servicecomputer 32 verbunden.

Soll zum Beheben eines Störfalls am Kassendrucker 16 eine Fehleranalyse durchgeführt werden, so wird ein Funktelefon 24 mit einer Infrarotschnittstelle 28 so neben dem Kassendrucker 16 positioniert, daß die Infrarotschnittstelle 28 des Funktelefons 24 mit der Infrarotschnittstelle 26 des Kassendruckers 16 Daten austauschen kann. Die Infrarotschnittstelle 26 des Kassendruckers 16 ist so an der Vorderseite oder an der Oberseite des Kassendruckergehäuses angeordnet, daß ohne weiteres eine Datenübertragung zu einem weiteren Gerät über die Luft möglich ist, ohne daß der Kassendrucker 16 dazu in irgendeiner Weise demontiert werden muß oder daß die betriebsmäßige Positionierung des Kassendruckers 16 verändert werden muß. Bei anderen Ausführungsformen ist die Infrarotschnittstelle 26 an einer leicht zugänglichen Stelle im Inneren des Kassendruckergehäuses untergebracht, so daß sie beim betriebsbedingten Öffnen des Kassendruckergehäuses, wie es z.B. zum Wechselns der Kassenrollen bei Kassendruckern 16 üblich ist, gut zugänglich ist. Mit dem geöffneten Kassendruckergehäuse ist dann eine Infrarotverbindung mit dem Funktelefon 24 oder mit einem anderen Gerät mit Infrarotschnittstelle ohne weiteres möglich.

Mit Hilfe des Funktelefons 24 ist eine direkte Verbindung mit einem beim Hersteller des Kassendruckers 16 vorhandenen Servicecomputer 32 ohne weiteres möglich. Dazu wird das Funktelefon 24 mit Hilfe eines im Servicecomputer 32 integrierten Modems angewählt und eine Verbindung zum Funktelefon 24 über das Telekommunikationsnetz 30 aufgebaut. Am Funktelefon 24 ist die Infrarotschnittstelle 28 aktiviert, so daß automatisch eine Verbindung zur Infrarotschnittstelle 26 des Kassendruckers 16 hergestellt worden ist. Somit ist eine Verbindung zwischen dem Servicecomputer 32 und der Druckersteuerung 22 hergestellt. Eine solche Verbindung kann aber auch durch Anwählen der Rufnummer des Servicecomputers 32 mit Hilfe des Funktelefons 24 erfolgen. Eine Bedienperson kann mit Hilfe spezieller Programmmodule, die auf dem Servicecomputer 32 abgearbeitet werden, den Betriebszustand des Kassendruckers 16 sowie mögliche Fehlerzustände des Kassendruckers 16 analysieren. Auch kann der Datenaustausch der Druckersteuerung 22 mit dem Kassencomputer 12 über die Schnittstelle 20 durch den Servicecomputer 32 überwacht werden. Die Bedienperson kann so mit Hilfe des Servicecomputers 32 Parameter der Druckersteuerung 22 einstellen, die Programmdaten zum Betreiben der Schnittstelle 20 ändern bzw. neue Programmdaten zum Betreiben der Schnittstelle 20, d.h. ein neues Schnittstellentreiberprogramm, in die Druckersteuerung 22 implementieren. Er kann aber auch die gesamte Firmware der Druckersteuerung 22 durch andere Firmwaredaten ersetzen. Die Firmware ist dabei ein gerätespezifisches Programmmodul, durch dessen Abarbeitung zumindest Grundfunktionen der Druckersteuerung 22 bereitgestellt werden. Die Firmware der Druckersteuerung und das Treiberprogramm der Schnittstelle sind üblicherweise in einem Flash-EPROM (FEPROM) gespeichert. Die Parameter der Druckersteuerung sind jedoch in einem EEPROM-Speicherbereich der Druckersteuerung gespeichert. Somit lassen sie sich ohne weiteres durch neue Programmdaten überschreiben. Diese Daten können bei anderen Ausführungsbeispielen auch in einem RAM-Speicherbereich der Druckersteuerung 22 gespeichert sein. Dabei sollte dieser RAM-Speicherbereich jedoch durch eine unabhängige Spannungsversorgung, z.B. durch eine Batterie, versorgt werden, so daß bei Unterbrechen der Versorgungsspannung der Druckersteuerung 22 die Daten in diesem RAM-Speicherbereich erhalten bleiben. Bei einem EEPROM-Speichermodul ist eine solche Pufferung nicht notwendig. Die Daten in dem EEPROM-Speicherbereich bleiben auch bei Unterbrechung der Spannungsversorgung erhalten.

Die Programmdaten zum Betreiben der Infrarotschnittstelle 26 sind in einem ROM-Speicherbereich der Druckersteuerung 22 gespeichert. Das Treiberprogramm für die Infrarotschnittstelle 26 ist somit nur durch einen Austausch des ROM-Speichermoduls möglich. Jedoch werden zum Betreiben einer Infrarotschnittstelle keine komplizierten Schnittstellentreiber benötigt, so daß es üblicherweise nicht notwendig ist, diese Daten auszutauschen. Der Austausch der gerätespezifischen Programmdaten der Druckersteuerung 22, wie das Austauschen der Firmware, das Austauschen des Treiberprogramms für die Schnittstelle 20 sowie das Einstellen von Parametern der Druckersteuerung 22, erfolgt völlig unabhängig von dem Kassencomputer 12 und dem Kassenserver 14.

Die auf dem Kassencomputer 12 abzuarbeitenden Programmmodule einschließlich des Betriebssystems können auch während der Verbindung der Druckersteuerung 22 mit dem Servicecomputer 32 weiter abgearbeitet werden. Auch die Netzwerkverbindung zwischen dem Kassencomputer 12 und dem Kassenserver 14 kann beim Austausch der gerätespezifischen Programmdaten der Druckersteuerung 22 weiter aktiviert bleiben.

Bei einem weiteren Ausführungsbeispiel wird das Serviceprogramm auf einem transportablen Personalcomputer (nicht dargestellt), z.B. auf einem Laptop-Computer, abgearbeitet, der in der Nähe des Kassendruckers 16 so positioniert wird, daß die Infrarotschnittstelle des Laptop-Computers eine Datenverbindung zur Infrarotschnittstelle 26 des Kassendruckers 16 aufbauen kann. Somit kann eine Bedienperson gerätespezifische Programmdaten der Druckersteuerung 22 einfach austauschen, ohne Verkabelungen zwischen dem Kassencomputer 12 und dem Kassendrucker 16 zu lösen, sowie ohne eine Verbindung mit Hilfe eines Kabels zwischen dem Kassendrucker 16 und dem Laptop-Computer herstellen zu müssen. Gegenüber Steckverbindern bietet eine Infrarotdatenübertragung noch den Vorteil, daß eine solche Infrarotschnittstelle 26 an einer beliebigen Stelle des Kassendruckergehäuses angeordnet werden kann, da der Platzbedarf und die Störanfälligkeit der Infrarotsende- und -empfangseinheit gegenüber Umwelteinflüssen, wie z.B. Schmutz und/oder Luftfeuchte, wesentlich geringer ist als bei Schnittstellen mit Steckverbindern. Anstelle des Laptop-Computers kann aber auch ein sogenannter Handheld-Computer oder ein Palm-Oranizer mit Infrarotschnittstelle eingesetzt werden.

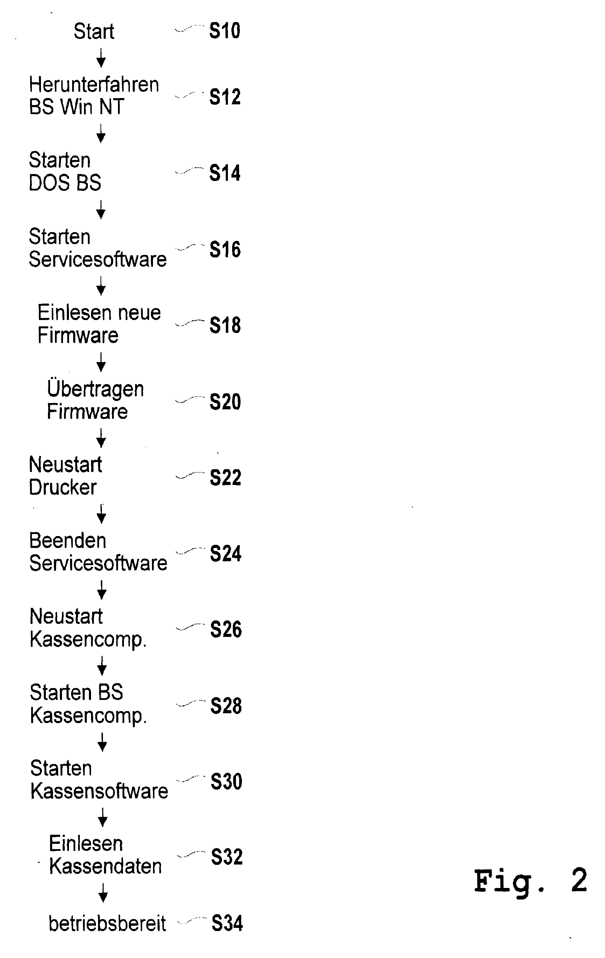

In Figur 2 ist ein Signalflußplan dargestellt, in dem bekannte Verfahrensschritte zum Erneuern der Firmware einer Drukkersteuerung 22 beim Stand der Technik gezeigt sind. Nachdem im Schritt S10 der Ablauf gestartet wurde, werden im Schritt S12 die auf dem Kassencomputer 12 abgearbeiteten Programmmodule einschließlich des Betriebssystems beendet. Übliche Betriebssysteme bei solchen Kassencomputern 12 sind z.B. MS-WINDOS NT, MS-WINDOWS 2000, UNIX und LINUX. Anschließend wird im Schritt S14 ein MS-DOS Betriebssystem und weiterhin im Schritt S16 eine Servicesoftware zum Bearbeiten und Übertragen von Firmwaredaten zu dem mit dem Kassencomputer 12 verbundenen Kassendrucker 16 gestartet. Sowohl das Betriebssystem MS-DOS als auch die Servicesoftware werden vom Kassencomputer abgearbeitet.

Mit Hilfe einer Bedienhandlung einer Bedienperson werden anschließend im Schritt S18 neue Firmwaredaten von einem Datenträger, z.B. von einer Diskette, von einer CD-ROM oder von der Festplatte des Kassencomputers 12 eingelesen und anschließend im Schritt S20 durch eine weitere Bedienhandlung der Bedienperson mit Hilfe der Kassencomputerschnittstelle 18 und der Druckerschnittstelle 20 zur Druckersteuerung 22 übertragen. Nach dem Übertragen der Firmware wird im Schritt S24 automatisch ein Neustart der Druckersteuerung 22 durchgeführt. Nach dem Neustart der Druckersteuerung 22 werden die übertragenen Firmwaredaten abgearbeitet. Der Kassendrucker 16 ist wieder betriebsbereit. Anschließend wird die Servicesoftware im Schritt S24 beendet und im Schritt S26 der Kassencomputer 12 neu gestartet. Daraufhin wird im Schritt S28 das Abarbeiten des Betriebssystems des Kassencomputers 12 und im Schritt S30 das Abarbeiten der Kassensoftware neu gestartet. Im Schritt S28 erfolgt auch die Anmeldung des Kassencomputers 12 beim Kassenserver 14 über die nicht näher beschriebene Netzwerkverbindung.

Nach dem Starten der Kassensoftware im Schritt S30 werden im Schritt S32 alle Kassendaten, die z.B. Angaben über Produkte und Preise enthalten, in den Kassencomputer 12 eingelesen. Je nach einzulesender Datenmenge kann dieser Vorgang mehrere Minuten dauern. Nach dem Einlesen der Kassendaten im Schritt S32 sind der Kassencomputer 12 und der Kassendrucker 16 wieder betriebsbereit. Somit ist beim Austausch der Firmware beim Stand der Technik geschultes Servicepersonal vor Ort unabdingbar. Auch ist durch das erforderliche Beenden der Kassensoftware und durch den anschließenden Neustart der Kassensoftware ein erheblicher Zeitaufwand erforderlich.

Dem Stand der Technik ist ebenfalls ein Verfahren zum Austausch der Firmware bekannt, bei dem zum Übertragen der Firmware ein separater Servicecomputer genutzt wird. Dieser Servicecomputer wird dann mit Hilfe eines Kabels mit der Drukkerschnittstelle 20 verbunden. Über diese Schnittstelle werden dann die Firmwaredaten zur Druckersteuerung 22 übertragen. Jedoch muß in einem solchen Fall das Verbindungskabel von der Schnittstelle 18 des Kassencomputers 12 getrennt und mit einer Schnittstelle des Servicecomputers verbunden werden. Da insbesondere Kassendrucker 16 und Kassencomputer 12 in Kassentischen integriert sind, ist ein Entfernen des Kabels zwischen der Schnittstelle 18 des Kassencomputers 12 und der Schnittstelle 20 des Kassendruckers 16 nur mit erheblichem Aufwand möglich. In einigen Fällen ist dazu die Demontage zumindest von Teilen des Kassentisches notwendig.

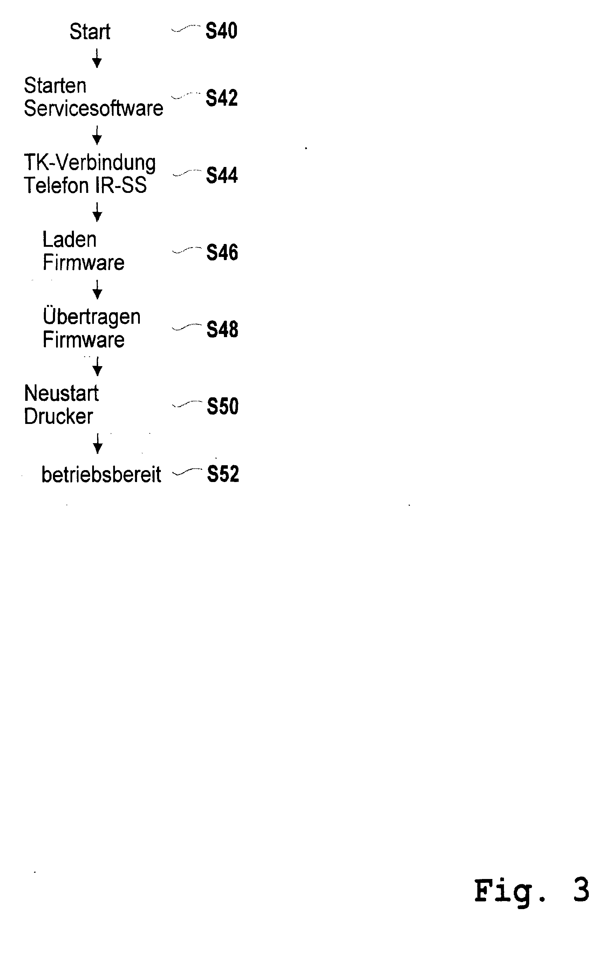

In Figur 3 ist ein Signalflußplan dargestellt, der Verfahrensschritte des erfindungsgemäßen Verfahrens zum Erneuern der Firmware der Druckersteuerung 22 zeigt. Im Schritt S40 wird der Ablauf gestartet. Anschließend wird im Schritt S42 die Servicesoftware auf dem Servicecomputer 32 geladen. Anschließend wird mit Hilfe einer Datenfernübertragung eine Verbindung zu dem Funktelefon 24, das eine Infrarotschnittstelle 28 hat, über ein Telekommunikationsnetz 30 aufgebaut. Das Funktelefon 24 ist dabei so positioniert, daß die Infrarotschnittstelle 28 des Funktelefons 24 mit der Infrarotschnittstelle 26 des Kassendruckers 16 eine Datenübertragung aufbauen kann. Weiterhin ist die Möglichkeit der Datenübertragung am Funktelefon 24 sowie die Infrarotschnittstelle 28 aktiviert. Zum Durchführen des Verfahrens ist es unerheblich, ob die Datenfernübertragung durch den Servicecomputer 32 oder durch das Funktelefon 24 aufgebaut wird. In Schritt S46 wird von einem Datenträger die zur Druckersteuerung 22 zu übertragende Firmware von der Servicesoftware geladen. Dieses Laden aktiviert üblicherweise eine Bedienperson am Servicecomputer 32. Diese Bedienperson aktiviert anschließend auch den Übertragungsvorgang der Firmware, der im Schritt S48 durchgeführt wird. Daraufhin wird die Firmware über das Telekommunikationsnetz 30 und über das Funktelefon 24 zur Druckersteuerung 22 übertragen.

Im Schritt S50 erfolgt anschließend ein Neustart der Druckersteuerung 22. Nach dem Neustart erfolgt das Abarbeiten der zur Druckersteuerung 22 übertragenen Firmware. Daraufhin sind der Kassencomputer 12 und der Kassendrucker 16 wieder betriebsbereit. Das Übertragen der Firmware zur Druckersteuerung 22 hat keinen Einfluß auf die abzuarbeitenden Kassensoftware auf dem Kassencomputer 12 und auf die Verbindung des Kassencomputers 12 zum Kassenserver 14. Jedoch ist ein Übermitteln von Druckdaten von dem Kassencomputer 12 zur Druckersteuerung 22 während des Übertragens der Firmwaredaten zur Druckersteuerung 22 sowie das Abarbeiten von Druckaufträgen nicht möglich. Bei einem Verbindungsaufbau zwischen der Drukkersteuerung 22 und dem Servicecomputer 32 über die Serviceschnittstelle 26 des Kassendruckers 16 werden noch anstehende Druckaufträge abgearbeitet. Während dieser Zeit ist ein Übertragen der neuen Firmware nicht möglich. Neue Druckaufträge werden nach dem Aufbau der Datenverbindung zwischen der Drukkersteuerung 22 und dem Servicecomputer 32 nicht mehr über die Druckerschnittstelle 20 angenommen. Es ist jedoch auch möglich, daß das Abarbeiten noch abzuarbeitender Druckaufträge zum Erneuern der gerätespezifischen Programmdaten unterbrochen wir, wobei das Abarbeiten dieser Druckaufträge nach dem Erneuern der Software fortgesetzt werden kann.

### Bezugszeichenliste

- 10: Kassensystem
- 12: Kassencomputer
- 14: Kassenserver
- 16: Kassendrucker
- 18: Schnittstelle Kassencomputer
- 20: Druckerschnittstelle
- 22: Druckersteuerung
- 24: Funktelefon
- 26: Serviceschnittstelle Drucker (Infrarotschnittstelle)
- 28: Infrarotschnittstelle Funktelefon
- 30: Telekommunikationsnetz
- 32: Servicecomputer
- S10 bis S52: Verfahrensschritte

## Patentansprüche

1. Verfahren zum Übertragen gerätespezifischer Programmdaten von Gerätesteuerungen,
bei dem Daten zwischen einer Gerätesteuerung (22) und einer weiteren Steuerung (12) über eine erste Schnittstelle (18, 20) übertragen werden,
die Gerätesteuerung (22) ein gerätespezifisches Programmodul hat, das in einem Speicherbereich der Gerätesteuerung (22) gespeichert wird,
und bei dem durch das Abarbeiten des gerätespezifischen Programmoduls zumindest Grundfunktionen der Gerätesteuerung (22) bereitgestellt werden,
**dadurch gekennzeichnet, daß**
mit Hilfe einer zweiten Schnittstelle (26, 28) Daten zu der Gerätesteuerung (22) übertragen werden, mit denen zumindest Teile des gerätespezifischen Programmoduls überschreibbar sind.

2. Verfahren nach Anspruch 1, **dadurch gekennzeichnet, daß** die erste Schnittstelle (18, 20) eine USB-Schnittstelle oder eine Fire-Wire-Schnittstelle ist.

3. Verfahren nach einem der vorhergehenden Ansprüche, **dadurch gekennzeichnet, daß** die zweite Schnittstelle (26, 28) eine IRDA-Schnittstelle ist.

4. Verfahren nach einem der vorhergehenden Ansprüche, **dadurch gekennzeichnet, daß** das gerätespezifische Programmodul zumindest ein Programm zum Betreiben der ersten Schnittstelle (20) enthält.

5. Verfahren nach einem der vorhergehenden Ansprüche, **dadurch gekennzeichnet, daß** das gerätespezifische Programmodul zumindest eine Firmware der Gerätesteuerung (22) enthält.

6. Verfahren nach einem der vorhergehenden Ansprüche, **dadurch gekennzeichnet, daß** das zumindest Teile des gerätespezifischen Programmoduls in einem EEPROM-Speicherbaustein der Gerätesteuerung (22) gespeichert sind.

7. Verfahren nach einem der vorhergehenden Ansprüche, **dadurch gekennzeichnet, daß** ein Programm des gerätespezifischen Programmoduls zum Betreiben der zweiten Schnittstelle (28) in einem ROM-Speicherbaustein der Gerätesteuerung (22) gespeichert ist.

8. Gerätesteuerung, die mit Hilfe einer ersten Schnittstelle (20) Daten mit einer weiteren Steuerung (12) austauscht,
mit einem gerätespezifischen Programmodul, das in einem Speicherbereich der Gerätesteuerung (22) gespeichert ist,
wobei die Gerätesteuerung durch das Abarbeiten des gerätespezifischen Programmoduls zumindest Grundfunktionen des Gerätes (16) bereitstellt,
**dadurch gekennzeichnet, daß**
mit Hilfe einer zweiten Schnittstelle (26) Daten übertragbar sind, mit denen zumindest Teile des gerätespezifischen Programmoduls überschreibbar sind.

9. Datenverarbeitungssystem zum Überschreiben gerätespezifischer Daten in einer Gerätesteuerung (22),
bei dem die Gerätesteuerung (22) mit Hilfe einer ersten Schnittstelle (18, 20) Daten mit einer ersten Steuerung (12)austauscht,
die Gerätesteuerung (22) mindestens ein gerätspezifisches Programmodul hat, das in einem Speicherbereich der Gerätesteuerung (22) gespeichert ist,
wobei die Gerätesteuerung (22) durch das Abarbeiten des gerätespezifischen Programmoduls zumindest Grundfunktionen der Gerätesteuerung (22) bereitstellt,
**dadurch gekennzeichnet, daß**
mit Hilfe einer zweiten Schnittstelle Daten (26, 28) zu der Gerätesteuerung (22) übertragbar sind, mit denen zumindest Teile des gerätespezifischen Programmoduls überschreibbar sind.
